# EUROPÄISCHE PATENTSCHRIFT

(11) **EP 4 584 653 B1**
(45) Veröffentlichungstag und Bekanntmachung des Hinweises auf die Patenterteilung: **15.10.2025**
(21) Anmeldenummer: 23836793.2
(22) Anmeldetag: 20.12.2023
(51) Int. Cl.: G05B 23/02, G07C 5/00, G07C 5/08

(54) **VERFAHREN ZUR BESTIMMUNG EINES ABNUTZUNGSINDIKATORS FÜR EIN FAHRZEUG UND FAHRZEUG**
METHOD FOR DETERMINING A WEAR INDICATOR FOR A VEHICLE, AND VEHICLE
PROCÉDÉ DE DÉTERMINATION D'UN INDICATEUR D'USURE POUR UN VÉHICULE ET VÉHICULE

(30) Priorität: 12.01.2023 DE 102023000076
(43) Veröffentlichungstag der Anmeldung: 16.07.2025
(73) Patentinhaber: Mercedes-Benz Group AG, 70372 Stuttgart (DE)
(72) Erfinder: HOIS, Joana, 71034 Böblingen (DE); HANUSCHKIN, Alexander, 76133 Karlsruhe (DE); STUDER, Stefan, 70565 Stuttgart (DE)
(74) Vertreter: Novagraaf Group
(86) Internationale Anmeldenummer: PCT/EP2023/086922
(87) Internationale Veröffentlichungsnummer: WO 2024/149585

(56) Entgegenhaltungen:
- EP-A1- 4 091 896
- WO-A1-2017/051032
- WO-A1-2019/122558
- WO-A1-2020/007688
- DE-A1- 102016 221 086

## Beschreibung

Die Erfindung betrifft ein Verfahren zur Bestimmung eines Abnutzungsindikators für ein Fahrzeug nach der im Oberbegriff von Anspruch 1 näher definierten Art sowie ein entsprechendes Fahrzeug zur Durchführung des Verfahrens.

Bei einem Fahrzeug wie einem Pkw handelt es sich um einen Alltagsgegenstand, der sich über die Zeit und insbesondere bei starker Verwendung abnutzt. So muss verbrauchtes Scheibenwischwasser nachgefüllt werden, der Ölfilter oder der Pollenschutzfilter ausgewechselt werden, verschlissene Teile der Bremsanlage, bspw. abgefahrene Bremsbeläge oder korrodierte Bremsscheiben ausgewechselt werden und dergleichen. Damit Fahrzeuge nicht liegen bleiben werden daher nach fest vorgegebenen Wartungsintervallen wie beispielsweise alle 30.000 Kilometer oder einmal im Jahr Wartungen am Fahrzeug vorgenommen. Fahrzeuge nutzen sich jedoch nicht gleichartig ab, sodass die fest vorgegebenen Wartungsintervalle zu früh oder zu spät liegen können. Typischerweise werden die Wartungsintervalle mit einem ausreichenden Puffer festgelegt, sodass bei einer standardmäßigen Fahrzeugnutzung keine Probleme drohen. Jedoch werden dann gegebenenfalls Fahrzeugkomponenten unnötig oft überprüft bzw. gewechselt, obwohl dies noch gar nicht notwendig ist. Auch besteht die Gefahr, dass sich bestimmte Fahrzeugkomponenten stärker als erwartet abnutzen was das frühere Durchführen einer Wartung erfordern würde. Es entsteht somit der Bedarf Verfahren und Mittel bereitzustellen, die es ermöglichen, den Zeitpunkt zum Durchführen einer Fahrzeugwartung besser abzuschätzen.

Aus der WO 2022/012837 A1 ist ein Verfahren zum Prädizieren eines Wartungszeitpunkts bekannt.

Die EP 2 674 343 A2 offenbart zudem ein Verfahren und eine Vorrichtung zum Bestimmen des Fahrverhaltens von Fahrzeugführern. Während der Fahrzeugnutzung werden Parameter des Fahrers des jeweiligen Fahrzeugs erhoben, mit deren Hilfe das Fahrverhalten beschrieben werden kann. Als Parameter dienen hierzu die auf das Fahrzeug wirkende Längs- und/oder Querbeschleunigung. Die ermittelte Fahrverhaltenscharakterisierung kann im Fahrzeug ausgegeben werden, um den Fahrer dazu zu veranlassen defensiverer zu fahren.

Ferner lässt sich im Alltag beobachten, dass Personen unterschiedlich mit Eigentum und Fremdgütern umgehen. Während ein Fahrzeughalter in der Regel pfleglich mit seinem eigenen Fahrzeug umgeht und dieses schonend fährt, sodass sich Komponenten vergleichsweise langsam abnutzen, so wird darauf bei der Nutzung beispielsweise eines Mietfahrzeugs oder Leasingfahrzeugs weniger Rücksicht genommen. Dies begründet sich unter anderem darin, dass die Abnutzung eines Mitfahrzeugs für die fahrzeugführende Person keine Rolle spielt, weil sie das Mietfahrzeug nur temporär nutzt und für keinerlei Wartungskosten direkt aufkommen muss.

Ferner offenbart die DE 10 2016 221 086 A1 ein Verfahren zur Ermittlung einer Verschleißkennzahl für ein Fahrzeug. Ein Fahrzeug erfasst Daten die seine Nutzung beschreiben, welche von einem Server zum Ermitteln der Verschleißkennzahl ausgewertet werden. Droht ein Ausfall des Fahrzeugs aufgrund einer zu stark verschlissenen Fahrzeugkomponente, so wird rechtzeitig vorher eine Warnmeldung an einen Nutzer ausgegeben.

Zudem offenbart die DE 10 2014 213 522 A1 eine Vorrichtung und ein Verfahren zum Bestimmen von Belastungsprofilen von Kraftfahrzeugen. Hier leitet ebenfalls ein Server in Abhängigkeit von einem Kraftfahrzeug erhobener Betriebsgrößen entsprechende Verschleißparameter ab. Als Betriebsgrößen können unter anderem berücksichtigt werden: die Betriebsdauer, die Geschwindigkeit, die Längs- und/oder Querbeschleunigung, die Motordrehzahl sowie eine jeweilige Standardabweichung der respektiven Größe.

EP 4 091 896 A1 und WO 2019/122558 A1 offenbaren ein Verfahren zur Erkennung eines Fahrverhaltens, das potenziell schädlich für eine oder mehrere zu schützende Komponenten ist. Dieses Fahrverhalten kann zu vorzeitigem Verschleiß und letztlich zum Ausfall der betroffenen Komponenten führen. Bei Erkennung eines solchen Verhaltens wird der Fahrer informiert.

WO 2020/007688 A1 offenbart eine Sensorvorrichtung und ein Verfahren zur Bestimmung eines Zustandes einer mechanischen Fahrzeugkomponente und/oder einer Karosseriestruktur eines Fahrzeugs.

WO 2017/051032 A1 offenbart ein Verfahren und System zur Bestimmung von Referenzwerte für eines Wartungszustand einer Maschinenkomponente, wie eines Fahrzeugs, durch vordefinierte physikalische Grenzen für intakte und gebrochene Zustände. Überwachungsdaten wie Bewegung und Beschleunigung werden erfasst, um den physikalischen Zustand der Komponente zu berechnen und entsprechend zu aktualisieren.

Der vorliegenden Erfindung liegt die Aufgabe zugrunde ein verbessertes Verfahren zur Bestimmung eines Abnutzungsindikators für ein Fahrzeug anzugeben, mit dessen Hilfe sich besonders genau der Moment bestimmen lässt, zu dem eine Wartung für eine bestimmte Fahrzeugkomponente fällig ist.

Erfindungsgemäß wird diese Aufgabe durch ein Verfahren zur Bestimmung eines Abnutzungsindikators für ein Fahrzeug mit den Merkmalen des Anspruchs 1 sowie ein Fahrzeug zur Durchführung des Verfahrens mit den Merkmalen des Anspruchs 8 gelöst. Vorteilhafte Ausgestaltungen und Weiterbildungen ergeben sich aus den hiervon abhängigen Ansprüchen.

Ein gattungsgemäßes Verfahren zur Bestimmung eines Abnutzungsindikators für ein Fahrzeug, wobei das Fahrzeug über seine Lebensdauer hinweg mittels Überwachungsgliedern fortwährend Betriebsdaten erfasst und zumindest einige der Betriebsdaten über die Nutzungsdauer des Fahrzeugs gespeichert und durch eine Recheneinheit verarbeitet werden, wobei ein Teil der Betriebsdaten von einem Fahrverhalten einer das Fahrzeug führenden Person abhängig ist, wird erfindungsgemäß dadurch weitergebildet, dass
- der vom Fahrverhalten abhängige Teil der Betriebsdaten und ein von Einstellungen von Fahrzeugfunktionen abhängiger Teil der Betriebsdaten in einem Nutzungsvektor aggregiert werden, wobei jedem Vektorelement durch ein individuelles Überwachungsglied generierte Daten zugeteilt werden;
- ein Umgebungsbedingungen des Fahrzeugs repräsentierender Teil der Betriebsdaten in einen Umgebungsvektor aggregiert wird, wobei jedem Vektorelement durch ein individuelles Überwachungsglied generierte Daten zugeteilt werden;
- das Fahrzeug den Nutzungsvektor und den Umgebungsvektor an eine fahrzeugexterne zentrale Recheneinheit übermittelt, wobei die zentrale Recheneinheit Zugriff auf eine Abnutzungsdatenbank hat, in der Zusammenhänge zwischen den im Nutzungsvektor aggregierbaren Daten und den im Umgebungsvektor aggregierbaren Daten zum Abnutzungsverhalten von Fahrzeugkomponenten enthalten sind;
- die zentrale Recheneinheit den Nutzungsvektor und den Umgebungsvektor mit dem Inhalt der Abnutzungsdatenbank abgleicht und hieraus einen Abnutzungsvektor ermittelt, wobei jedes Vektorelement den Abnutzungsgrad einer individuellen Fahrzeugkomponente beschreibt; und
- die zentrale Recheneinheit unter Verrechnung der Vektorelemente des Abnutzungsvektors den Abnutzungsindikator berechnet; und wobei
- die zentrale Recheneinheit wenigstens ein Vektorelement des Nutzungsvektors durch ein korrespondierendes, emuliertes Vektorelement austauscht und hierauf basierend einen Alternativ-Abnutzungsvektor und Alternativ-Abnutzungsindikator ermittelt und diese an das Fahrzeug übermittelt; wobei
- die zentrale Recheneinheit den Abnutzungsindikator und den Abnutzungsvektor an das Fahrzeug übermittelt; und
- der Abnutzungsindikator sowie der Alternativ-Abnutzungsindikator und/oder der Wert zumindest eines Vektorelements des Abnutzungsvektors sowie des Alternativ-Abnutzungsvektors im Fahrzeug an die fahrzeugführende Person ausgegeben werden.

Der Abnutzungsindikator repräsentiert eine Information die beschreibt, wie stark das Fahrzeug abgenutzt ist. Je nach Fahrzeugtyp und Fahrzeugausführung können verschiedene Referenzwerte hinterlegt werden, die mit dem Abnutzungsindikator vergleichen werden. Liegt der Abnutzungsindikator über oder unter diesen Referenzwerten, so kann dies als Hinweis zum Durchführen einer Wartung verstanden werden. Die einzelnen Vektorelemente des Abnutzungsvektors beschreiben dabei den Abnutzungsgrad der einzelnen Fahrzeugkomponenten. Der Abnutzungsvektor kann beispielsweise als Vektorelemente einen Eintrag für die Zündkerzen, einen Teil der Auspuffanlage, die Bremsscheiben, die Bremsbeläge, den Keilriemen und dergleichen aufweisen, welche jeweils mit einer Zahl verknüpft werden. Diese Zahl kann beispielsweise eine Ausprägung zwischen 0 und 10 annehmen. Bei einem fabrikneuen Fahrzeug sind dann alle Werte des Abnutzungsvektors 0 und nehmen durch entsprechende Abnutzung zu. Analog kann auch der Abnutzungsindikator normiert sein, beispielsweise auf einen Bereich zwischen 0-1, 0-10 oder 0-100.

Ferner können individuelle Referenzwerte für die unterschiedlichen Vektorelemente hinterlegt werden, sodass die zentrale Recheneinheit diese vektorelementspezifischen Referenzwerte mit den einzelnen Vektorelementen vergleichen kann und dann das Erfordernis eine Wartung durchzuführen ermitteln kann, wenn bereits ein einzelnes Vektorelement des Abnutzungsvektors seinen entsprechenden Referenzwert übersteigt. Das erfindungsgemäße Verfahren erlaubt somit eine besonders genaue Abschätzung des Zeitpunkts, zu dem eine entsprechende Wartung durchgeführt werden muss.

Es werden dabei umfassende Einflussfaktoren auf die Abnutzung des Fahrzeugs bzw. der Fahrzeugkomponenten berücksichtigt. Hierzu zählt zum einen das Fahrverhalten der fahrzeugführenden Person. Fährt die fahrzeugführende Person sportlicher, so werden stärkere Beschleunigungsprofile gefahren, wodurch Reifen und Bremsbeläge schneller abgefahren werden, sich ein Ölpartikelfilter schneller zusetzt, mechanische Komponenten verschleißen und dergleichen. Zum anderen wirken sich die von der fahrzeugführenden Person getätigten Einstellungen der Fahrzeugfunktionen auf die Abnutzung der Fahrzeugkomponenten aus. Hat die fahrzeugführende Person beispielsweise ein sportliches Schaltprofil eingestellt, so schaltet das Automatikgetriebe bei höheren Drehzahlen, wodurch die entsprechenden Fahrzeugkomponenten ebenfalls schneller verschleißen. Bevorzugt die fahrzeugführende Person eine höhere Lüftereinstellung sowie eine kalte Innenraumtemperatur, so wird auch die Klimaanlage des Fahrzeugs stärker beansprucht und nutzt sich ebenfalls entsprechend schneller ab. So müssen dann beispielsweise Pollenfilter schneller ausgetauscht werden oder das Kältemittel der Klimaanlage ausgetauscht bzw. die Leitungsrohre der Klimaanlage auf Undichtigkeit überprüft werden. Diese Informationen werden im Nutzungsvektor aggregiert.

Zur Erfassung der Betriebsdaten nutzt das Fahrzeug Überwachungsglieder. Hierbei handelt es sich um Sensoren wie Beschleunigungssensoren, Temperaturmessfühler, Raddrehzahlsensoren, Durchflussmesser und dergleichen sowie Umgebungssensoren wie Kameras, Laserscanner, Radarsensoren und Ultraschallsensorsysteme. Zudem lassen sich mit Hilfe der Überwachungsglieder von Steuergeräten verarbeitete Informationen, insbesondere Einstellungsparameter, auslesen. Hierzu können die Überwachungsglieder fest in entsprechende Recheneinheiten integriert sein bzw. über einen Datenbus wie einen CAN-Bus übermittelte Informationen auslesen. Die Überwachungsglieder können so beispielsweise einen Öffnungsgrad eines elektrischen Fensterhebers, eine eingestellte Sitzposition, eine eingestellte Lüfterstufe einer Klimaanlage, einen Einschaltzustand von Beleuchtungsvorrichtungen und dergleichen erfassen. So lässt sich beispielsweise die Betriebszeit einzelner Leuchtquellen im Fahrzeuginnenraum nachverfolgen und rechtzeitig ein Wechsel entsprechender Leuchtmittel vorschlagen, wenn die Lebensdauer der von den Leuchtquellen umfassten Leuchtmitteln bald endet.

Die Vektorelemente des Abnutzungsvektors bzw. der Abnutzungsindikator selbst lassen sich auch mit einem Geldfaktor multiplizieren, was eine Kostenschätzung zur Durchführung der Wartung erlaubt. Mit anderen Worten lässt sich hierdurch beschreiben, wie stark der Fahrzeugwert durch die Abnutzung sinkt. Diese Geldfaktoren können beliebig bestimmt werden. Beispielsweise kann ein Geldfaktor von 0 für die Bremsscheiben verwendet werden, wenn das respektive Vektorelement des Abnutzungsvektors einen so geringen Wert aufweist, dass noch kein Austausch nötig ist. Steigt die Abnutzung der Bremsscheiben an, sodass das Vektorelement den jeweiligen Referenzwert überschreitet, so kann der Geldfaktor für die Bremsscheiben von 0 auf den tatsächlichen aktuellen Teilewert, den man beispielsweise für einen Wechsel in der Werkstatt bezahlen muss, ansteigen.

Die zentrale Recheneinheit kann dabei den Abnutzungsvektor bzw. Abnutzungsindikator für die einzelnen Fahrzeuge einer Fahrzeugflotte individuell nachverfolgen. Hierzu kann auf der zentralen Recheneinheit eine entsprechende Datenbank hinterlegt sein. Verwenden unterschiedliche Personen ein und dasselbe Fahrzeug, beispielsweise bei einem Leasingfahrzeug oder einem Mietwagen, so werden die jeweiligen Abnutzungserscheinungen durch die individuelle Nutzung der Fahrzeuge durch die unterschiedlichen Personen berücksichtigt. Bei der zentralen Recheneinheit kann es sich beispielsweise um einen Cloudserver, auch als Backend bezeichnet, handeln. Die zentrale Recheneinheit kann beispielsweise vom Fahrzeughersteller betrieben werden. Zum Datenaustausch zwischen Fahrzeug und zentraler Recheneinheit kommen beliebige Funktechnologen in Frage, wie beispielsweise Mobilfunk, Wi-Fi, Bluetooth, ZigBee und dergleichen. Hierzu können die Fahrzeuge über eine drahtlose Kommunikationsschnittstelle verfügen, beispielsweise ausgebildet durch eine Telematikeinheit.

Mit Hilfe des Umgebungsvektors lassen sich die Umgebungsbedingungen des Fahrzeugs über dessen Lebensdauer nachverfolgen. So lässt sich beispielsweise nachverfolgen, dass das Fahrzeug besonders häufig auch im Winter und/oder bei schlechten Witterungsverhältnissen wie bei Kälte, Regen oder Schnee genutzt wird. Dies ist ein zusätzlicher Indikator für eine verstärkte Abnutzung aufgrund von feuchtebedingter Korrosion, insbesondere verschlimmert durch Streusalz. Erlebt das Fahrzeug häufige Temperaturschwankungen, beispielsweise weil das Fahrzeug in klimatischen Regionen genutzt wird, an denen es tagsüber sehr warm und nachts sehr kalt ist bzw. im Winter in der Kälte gefahren wird jedoch in einer warmen Garage abgestellt wird, so können sich diese Temperaturschwankungen ebenfalls nachteilig auf die Lebensdauer einzelner Fahrzeugkomponenten ausüben. Aufgrund von thermischer Dehnung können beispielsweise Spalte vergrößert werden oder die Zähigkeit von Fluiden schneller ihren Sollbereich verlassen. Umgebungsbedingungen kann das Fahrzeug nicht nur mittels Sensoren selbst bestimmen, sondern auch von extern beziehen. Beispielsweise kann das Fahrzeug drahtlos Informationen von einem Verkehrsdienst oder einem Wetterdienst empfangen. Ermittelt das Fahrzeug, dass es häufig zu Bedingungen gefahren wird, an denen die Luft staubig ist oder mit Pollen beladen ist, so kann sich dies auf das Zusetzen der Luftfilter des Fahrzeugs ausüben. Fährt das Fahrzeug häufig bei Stau oder stockendem Verkehr wie zur Rush-Hour, so werden mehr Start/Stopp-Vorgänge von einer automatischen Motorabschaltungsvorrichtung durchgeführt.

Die Abnutzungsdatenbank beschreibt Regeln, wie die Ausprägung der Werte des Abnutzungsvektors in Abhängigkeit der im Nutzungsvektor und Umgebungsvektor enthaltenen Informationen über die Lebensdauer nachzuführen ist. Werden also beispielsweise besonders viele Start- und Stoppvorgänge durchgeführt, starke Bremsmanöver durchgeführt, das Fahrzeug im Sommer häufig in der prallen Sonne geparkt und dergleichen, so beschreibt die Abnutzungsdatenbank wie in Abhängigkeit dieser Ausprägungen die jeweiligen Vektorelemente des Abnutzungsvektors erhöht werden müssen. Die Regeln können fest vorgegeben sein oder auch durch maschinelle Lernmethoden implementiert sein. Es kommen also Approximationen, heuristische Gleichungen sowie Maschinenlernmodelle für den Abgleich des Nutzungsvektors und des Umgebungsvektors mit dem Inhalt der Abnutzungsdatenbank in Frage.

Die Fahrzeuge der Fahrzeugflotte übermitteln ihre Betriebsdaten über ihre Lebensdauer hinweg an die zentrale Recheneinheit. Die zentrale Recheneinheit verfolgt nach, wann genau jeweils Wartungsarbeiten an den einzelnen Fahrzeugen durchgeführt werden, und ob diese notwendig waren, oder zu spät durchgeführt wurden. Zusätzlich können die dabei angefallenen Kosten erhoben und als Referenz gespeichert werden. Unter Berücksichtigung dieser Informationen pflegt die zentrale Recheneinheit die Abnutzungsdatenbank und kann somit immer neuere Regeln definieren, wie sich die Einträge des Nutzungsvektors und Umgebungsvektors auf den Abnutzungsvektor ausüben. Neben dem Definieren neuer Regeln können dabei auch bestehende Regeln angepasst werden.

Ferner gibt es verschiedene Möglichkeiten wie der Abnutzungsindikator aus dem Abnutzungsvektor ermittelt wird. Beispielsweise können alle Vektorelemente aufsummiert werden, ein Betrag des Abnutzungsvektors ermittelt werden, der Mittelwert aller Vektorelemente bestimmt werden, ein normierter Abnutzungsvektor berechnet werden oder dergleichen.

Der Abnutzungsvektor und der Abnutzungsindikator werden auf der zentralen Recheneinheit vorgehalten und verwaltet. Somit ist die zentrale Recheneinheit dazu in der Lage für jedes Fahrzeug einer Fahrzeugflotte die Abnutzung nachzuverfolgen und so beispielsweise rechtzeitig Werkstatttermine zum Durchführen von Wartungsarbeiten zu bestimmen. Entsprechende Werkstatttermine können dabei von der zentralen Recheneinheit auch automatisch gebucht werden.

Es ist vorgesehen, dass
- die zentrale Recheneinheit den Abnutzungsindikator und den Abnutzungsvektor an das Fahrzeug übermittelt; und
- der Abnutzungsindikator und/oder der Wert zumindest eines Vektorelements des Abnutzungsvektors im Fahrzeug an die fahrzeugführende Person ausgegeben wird.

Indem der Abnutzungsindikator und/oder der Wert zumindest eines Vektorelements des Abnutzungsvektors im Fahrzeug ausgegeben werden, lässt sich die fahrzeugführende

Person des Fahrzeugs über den Abnutzungsgrad des Fahrzeugs informieren. Dies kann genutzt werden, um die fahrzeugführende Person über den Einfluss ihres Nutzungsverhaltens auf die Abnutzung des Fahrzeugs zu sensibilisieren. So kann der fahrzeugführenden Person besonders anschaulich verdeutlicht werden, wie sich ihr Fahrverhalten und das Einstell- bzw. Nutzungsverhalten von Fahrzeugfunktionen auf die Abnutzung ausüben. Hierdurch wird die fahrzeugführende Person veranlasst ein defensiveres Fahrverhalten an den Tag zu legen, um die Abnutzung des Fahrzeugs zu verlangsamen und entsprechend Wartungskosten zu minimieren. Ebenfalls werden dabei auch die Umgebungsbedingungen berücksichtigt. Parkt die fahrzeugführende Person beispielsweise ihr Fahrzeug im Sommer häufig in der prallen Sonne, so kann dies dazu führen, dass der Lack des Fahrzeugs schneller altert. So kann der fahrzeugführenden Person eine Information ausgegeben werden, ihr Fahrzeug im Sommer häufiger im Schatten zu parken. Somit können also nicht nur die Werte des Abnutzungsindikators bzw. der Wert eines Vektorelements des Abnutzungsvektors im Fahrzeug ausgegeben werden, sondern auch noch ergänzende Hinweise, die zum Verlangsamen der Abnutzung des Fahrzeugs anleiten können. Das Ausgeben von Informationen im Fahrzeug kann über gängige Mittel erfolgen. So ist beispielsweise eine visuelle Informationsausgabe über Anzeigevorrichtungen wie das Kombiinstrument, die Headunit, ein Headup-Display oder dergleichen möglich. Eine akustische Informationsausgabe ist über Lautsprecher möglich.

Das Nutzungsverhalten des Fahrzeugs kann dabei auch live durch das Fahrzeug während der Nutzung nachverfolgt werden. In dem Moment, an dem die fahrzeugführende Person sich so verhält, dass das Fahrzeug übermäßig abgenutzt wird, beispielsweise aufgrund eines besonders starken Beschleunigungs- oder Bremsmanövers, kann auch in diesem Moment eine Information ausgegeben werden, die die fahrzeugführende Person auf das nachteilige Nutzungsverhalten hinweist. Hier kommt auch eine haptische Informationsausgabe in Betracht, wie beispielsweise das Vibrieren des Lenkrads des Fahrzeugs.

Bevorzugt existiert eine Einstellmöglichkeit, beispielsweise im Infotainmentsystem des Fahrzeugs, mit der die fahrzeugführende Person festlegen kann, in welchem Grad sie über den Abnutzungsindikator bzw. Abnutzungsvektor informiert werden möchte. Hier kann die fahrzeugführende Person dann beispielsweise auch eingeben, ob Informationen live ausgegeben werden sollen.

Der Abnutzungsindikator bzw. der Abnutzungsvektor eines jeweiligen Fahrzeugs kann dabei auch Dritten bereitgestellt werden, beispielsweise durch einen Zugang über die zentrale Recheneinheit. Bei den Dritten kann es sich beispielsweise um Zulieferer des Fahrzeugherstellers handeln oder Dienstleister wie ein Versicherungsunternehmen. Die Dritten können die so auslesbaren Informationen verarbeiten und zum Anpassen ihrer Geschäftsmodelle nutzbringend verwenden.

Ferner ist es erfindungsgemäß vorgesehen, dass die zentrale Recheneinheit wenigstens ein Vektorelement des Nutzungsvektors durch ein korrespondierendes, emuliertes Vektorelement austauscht und hierauf basierend einen Alternativ-Abnutzungsvektor und Alternativ-Abnutzungsindikator ermittelt und diese an das Fahrzeug übermittelt. Hierdurch lassen sich Vorschläge an die fahrzeugführende Person ausgeben, wie diese ihr Nutzungsverhalten des Fahrzeugs anpassen kann, um für eine geringere Abnutzung zu sorgen. Beispielsweise könnte als Vektorelement die Längsbeschleunigung des Fahrzeugs über der Zeit betrachtet werden. Als emuliertes Vektorelement wird dann ein Beschleunigungsverlauf bereitgestellt, der im Vergleich weniger große Beschleunigungsamplituden enthält, also korrespondierend zu einer defensiveren Fahrweise. Die zentrale Recheneinheit berücksichtigt dann einen solchen "emulierten" Nutzungsvektor zur Berechnung des Alternativ-Abnutzungsvektors und Alternativ-Abnutzungsindikators. Dementsprechend werden der Alternativ-Abnutzungsvektor bzw. Alternativ-Abnutzungsindikator geringere Werte annehmen, welche stellvertretend sind für eine geringere Fahrzeugabnutzung. Dies veranschaulicht der fahrzeugführenden Person ganz besonders, wie sie ihre Nutzung vorteilhaft verändern kann, um die Abnutzung des Fahrzeugs zu verlangsamen und somit auch Kosten zu sparen

Entsprechend einer vorteilhaften Ausgestaltung des Verfahrens identifiziert das Fahrzeug die fahrzeugführende Person, ordnet ihr ein personenspezifisches Nutzerprofil zu und übermittelt dieses an die zentrale Recheneinheit, wobei der Abnutzungsindikator mit dem Nutzerprofil verknüpft wird. Das Fahrzeug oder die zentrale Recheneinheit erhebt Relationsinformationen, wobei eine Relationsinformation beschreibt, innerhalb welcher vertraglichen Rahmenbedingungen die fahrzeugführende Person das Fahrzeug nutzt. Die zentrale Recheneinheit ermittelt dann für jede neue Relationsinformation einen relationsinformationsspezifischen Abnutzungsindikator. Indem den einzelnen fahrzeugführenden Personen individuelle Nutzerprofile zugeordnet werden, lässt sich von der zentralen Recheneinheit nicht nur das Abnutzungsverhalten eines einzelnen Fahrzeugs nachverfolgen, sondern auch noch der Einfluss bestimmter Personen dabei berücksichtigen.

Besonders relevant ist dafür die "Relation", also das Verhältnis zwischen Fahrzeug und fahrzeugführender Person. Wie bereits eingangs erwähnt verhalten sich Nutzer oftmals so, dass Miet- oder Leasingfahrzeuge schneller abgenutzt werden im Vergleich zum eigenen Fahrzeug. Um dies zu berücksichtigen enthält die Relationsinformation beispielsweise folgende Einträge: Eigenbesitz, Fremdfahrzeugmiete, Fremdfahrzeugleasing oder dergleichen.

Wechselt ein und dieselbe Person das Fahrzeug, so kann der Person für jedes Fahrzeug ein individueller Abnutzungsindikator zugeteilt werden. Die Relationsinformationen können hierzu als Vektor, als Matrix oder auch als Tensor n-ter Stufe definiert sein. Für jede erstmalige Nutzung eines anderen Fahrzeugs werden dann diesem Nutzerprofil Einträge in Form der Relationsinformationen an den entsprechenden Vektor, Matrix oder Tensor angehängt. Mit der Zeit lassen sich so immer mehr Informationen über den Nutzer aggregieren, die beschreiben wie der Nutzer verschiedene Fahrzeuge unterschiedlich nutzt. Mit Hilfe der Relationsinformationen lässt sich so die Nutzungshistorie eines Nutzers über verschiedene Fahrzeuge nachverfolgen. Der Vektor, die Matrix bzw. der Tensor kann dann beispielsweise beschreiben, dass ein und derselbe Nutzer schon drei verschiedene eigene Fahrzeuge gefahren hat sowie bereits zehnmal ein Mietfahrzeug. Für jedes dieser Fahrzeuge wird dann ein relationsinformationsspezifischer Abnutzungsindikator ermitteln. Hierdurch lassen sich Muster erkennen, beispielsweise "kleine" Abnutzungsindikatoren für Eigenfahrzeuge und "hohe" Abnutzungsindikatoren für Mietfahrzeuge.

Eine Ausgestaltung der Relationsinformationen als Tensor, also beispielsweise als Tensor zweiter Stufe (Matrix), erlaubt eine eindeutige Zuordnung von Informationen. So kann beispielsweise in die erste Spalte der Relationsinformationsmatrix die Relation zwischen Fahrzeug und Nutzer geschrieben werden, also beispielsweise, ob es sich um Eigenfahrzeug oder ein gemietetes Fahrzeug handelt. In der zweiten Spalte lässt sich dann für dieses Fahrzeug eine Fahrstilbewertung auf Basis des Nutzungsvektors hinterlegen. In der dritten Spalte kann dann der relationsspezifische Abnutzungsindikator hinterlegt werden. Für jedes erstmalig neu genutzte Fahrzeug bzw. beim Ändern der vertraglichen Rahmenbedingungen, beispielsweise wenn eine Person ein Leasingfahrzeug übernimmt, wird eine neue Zeile an diese Matrix angehängt.

Das Identifizieren von Personen ist mittels üblicher Methoden möglich, wie das Anmelden mittels Nutzerkonto und Passwort, Scannen biometrischer Merkmale, Erkennen eines Identifikationstokens, beispielsweise auf einem mitgeführten Fahrzeugschlüssel, oder Auslesen eines Schlüsselparameters aus einem Smartphone oder dergleichen.

Das Verknüpfen des Abnutzungsindikators mit dem Nutzerprofil kann im Fahrzeug erfolgen oder auch von der zentralen Recheneinheit durchgeführt werden.

Damit das Fahrzeug die Relationsinformationen erheben kann, wird in der Regel eine manuelle Eingabe durch die fahrzeugführende Person notwendig sein. Hierzu kann das Fahrzeug die fahrzeugführende Person proaktiv zur Eingabe auffordern, beispielsweise über eine fahrzeugintegrierte Mensch-Maschine-Schnittstelle wie ein berührungsempfindliches Display oder auch über ein mobiles Endgerät, welches mit dem Fahrzeug unmittelbar oder mittelbar gekoppelt ist. So kann auf dem mobilen Endgerät eine entsprechende App ausgeführt werden, über die die fahrzeugführende Person die relevanten Daten eingeben kann. Das mobile Endgerät kann dann per Mobilfunk an das Internet und darüber wiederum an die zentrale Recheneinheit angebunden sein. Auch ist es denkbar, dass sich die fahrzeugführende Person zuhause auf einem Desktopcomputer oder einem Tabletcomputer mit einem eindeutigen Nutzerprofil an einem Nutzerkonto bei der zentralen Recheneinheit anmeldet und hier die relevanten Informationen über eine Eingabemaske im Internetbrowser eingibt.

Ein relationsinformationsspezifischer Abnutzungsindikator lässt sich auf die gleiche Art und Weise ermitteln wie ein Abnutzungsindikator. Hierzu kommen verschiedene Approximationsmethoden, heuristische Gleichungen oder Maschinenlernmodelle in Frage, die jeweils auf festen Regeln basierend arbeiten.

Ein und demselben Nutzer können gleichzeitig mehrere relationsinformationsspezifische Abnutzungsindikatoren im Fahrzeug ausgegeben werden, beispielsweise in einer direkten Gegenüberstellung, was den entsprechenden Nutzer daraufhin sensibilisiert, dass er je nach Fahrzeug ein anderes Nutzungsverhalten an den Tag legt. So ist gegebenenfalls manchen Personen nicht klar, dass sie ein Mietfahrzeug anders fahren als ihr eigenes Fahrzeug.

Bevorzugt berücksichtigt die zentrale Recheneinheit die Relationsinformation als weiteren Einflussparameter zum Bestimmen einer Ausprägung eines jeweiligen relationsinformationsspezifischen Abnutzungsindikators. Wie bereits erwähnt lässt sich generell ein relationsinformationsspezifischer Abnutzungsindikator analog zu einem Abnutzungsindikator bestimmen. Hierzu werden die Ausprägungen des Nutzungsvektors und des Umgebungsvektors von der zentralen Recheneinheit mit der Abnutzungsdatenbank verglichen. Da sich typischerweise einzelne Personen bei Fahrzeugen unterschiedlicher Relation, also bei einem Eigenfahrzug im Vergleich zu einem Mietfahrzeug, anders verhalten, werden schon alleine deshalb bei einer unterschiedlichen Relation die jeweiligen relationsspezifischen Abnutzungsindikatoren eine unterschiedliche Ausprägung annehmen, weil die Einträge der respektiven Nutzungsvektoren abweichen. Als weitere Einflussgröße kann jedoch auch die Relationsinformation selbst als Faktor zum Beeinflussen des Ergebnisses des relationsinformationsspezifischen Abnutzungsindikators herangezogen werden.

Eine Relationsinformation kann so auch als eine Art Gewichtungsfaktor verstanden werden. Handelt es sich beispielsweise um ein Eigenfahrzeug, so kann der relationsinformationsspezifische Abnutzungsindikator beispielsweise mit einem vergleichsweise geringen Wert wie 0,5 multipliziert werden. Handelt es sich hingegen um ein Mietfahrzeug oder Leasingfahrzeug, so kann eine Multiplikation mit einem vergleichsweise hohen Wert wie 1,5 oder 3 erfolgen. Dies erlaubt eine besonders schnelle und einfache Anpassung der Ausprägung des relationsinformationsspezifischen Abnutzungsindikators.

Dabei muss nicht zwangsweise der bereits berechnete Abnutzungsindikator gewichtet werden, sondern es können auch die einzelnen Elemente des zugrundeliegenden relationsinformationsspezifischen Abnutzungsvektors gewichtet werden.

Entsprechend einer weiteren vorteilhaften Ausgestaltung des Verfahrens ermittelt die zentrale Recheneinheit für jeden Abnutzungsindikator einen Konfidenzwert in Abhängigkeit einer Vollständigkeit des Nutzungsvektors, Umgebungsvektors und/oder der in der Abnutzungsdatenbank hinterlegten Zusammenhänge, wobei der Konfidenzwert bei einem während der Ermittlung eines jeweiligen Abnutzungsindikators vergleichsweise vollständigen Nutzungsvektor, Umgebungsvektor und/oder Abnutzungsdatenbank eine hohe Zutreff-Wahrscheinlichkeit und bei einem vergleichsweise unvollständigen Nutzungsvektor, Umgebungsvektor und/oder Abnutzungsdatenbank eine geringe Zutreff-Wahrscheinlichkeit beschreibt. Wird ein Fahrzeug erst seit kurzem genutzt, so liegen erst wenige Informationen zur Ausbildung des Nutzungsvektors und Umgebungsvektors vor. Entsprechend wird dann ein vergleichsweise geringer Konfidenzwert ermittelt. Der Konfidenzwert lässt sich im Fahrzeug ausgeben, sodass der jeweilige Fahrzeugnutzer darüber informiert wird, dass zwar ein Abnutzungsindikator ermittelt wurde, dieser jedoch erst eine geringe Aussagefähigkeit hat. Analog können in der Abnutzungsdatenbank bestimmte Zusammenhänge fehlen.

Wurde das Fahrzeug von der Person hingegen schon länger genutzt, so liegen auch mehr Informationen im Nutzungsvektor und Umgebungsvektor vor. Entsprechend wird ein höherer Konfidenzwert bestimmt, der somit die fahrzeugführende Person darüber informiert, dass die Aussagefähigkeit des Abnutzungsindikators bereits vergleichsweise hoch ist.

Eine weitere vorteilhafte Ausgestaltung des erfindungsgemäßen Verfahrens sieht ferner vor, dass die zentrale Recheneinheit einen relationsinformationsspezifischen Alternativ-Abnutzungsvektor und Alternativ-Abnutzungsindikator ermittelt und diese an das Fahrzeug übermittelt. Unter Berücksichtigung der Relationsinformationen kann dabei auch für jede Relation, also jedes Verhältnis des Nutzers zu unterschiedlichen Fahrzeugen, ein eigener Alternativ-Abnutzungsvektor und Alternativ-Abnutzungsindikator bestimmt werden.

Entsprechend einer weiteren vorteilhaften Ausgestaltung des erfindungsgemäßen Verfahrens verfolgt das Fahrzeug über ein zeitliches Intervall einen Verlauf zumindest eines Abnutzungsindikators, Abnutzungsvektorelements, Konfidenzwerts und/oder eines gemittelten Abnutzungsindikators, Abnutzungsvektorelements und/oder Konfidenzwerts nach, vergleicht einen jeweiligen nachverfolgten Wert mit einem jeweiligen vorgegebenen Schwellwert und gibt dem Fahrzeug einen Hinweis zum Durchführen einer Fahrzeugwartung früher aus, wenn der nachverfolgte Wert über dem Schwellwert liegt und gibt den Hinweis später aus, wenn der nachverfolgte Wert unter dem Schellwert liegt. Somit ist nicht nur die zentrale Recheneinheit, sondern das Fahrzeug selbst dazu in der Lage, die fahrzeugführende Person darüber zu informieren bzw. Empfehlungen auszugeben, wann Wartungen durchgeführt werden sollten.

Hierdurch lassen sich Zeitpuffer bzw. Abnutzungsreserven reduzieren. Aufgrund der gesteigerten Genauigkeit, wann genau Wartungen durchgeführt werden sollen, lassen sich die Wartungstermine je nach Fahrzeugkomponente zeitlich nach vorne oder hinten verlegen. Somit wird der Nutzerkomfort gesteigert, da nicht unnötigerweise Fahrzeugkomponenten ausgetauscht werden müssen bzw. Fahrzeugkomponenten rechtzeitig ausgetauscht werden. Dabei kann sowohl für den Abnutzungsindikator, ein jeweiliges Vektorelement des Abnutzungsvektors und für den Konfidenzwert bzw. entsprechend daraus gemittelte Werte, ein individueller Schwellwert vorgegeben werden.

Beispielsweise kann es erforderlich sein, eine Inspektion einmal pro Jahr oder alle 15.000 Kilometer durchführen zu lassen. In den 30 Tagen vor Ablaufen dieses Jahres bzw. in den 1.000 Kilometern vor Erreichen der 15.000 Kilometer kann dann im Fahrzeug eine visuelle Anzeige erfolgen, beispielsweise beim Anlassen des Fahrzeugs, dass die Inspektion durchzuführen ist. Diese Informationsausgabe kann unter Berücksichtigung des Abnutzungsvektors bzw. Abnutzungsindikators ausbleiben bzw. früher erfolgen. Auch könnte diese Information ergänzt werden durch eine Beschreibung, welche Fahrzeugkomponente bei der Inspektion bzw. dem Wartungsintervall gewartet werden muss, wie beispielsweise das Wechseln der Bremsbeläge an der Vorderachse, induziert durch das Vektorelement des Abnutzungsvektor, welches seinen respektiven Schwellwert überschreitet.

Eine weitere vorteilhafte Ausgestaltung des erfindungsgemäßen Verfahrens sieht ferner vor, dass besagte nachverfolgte Werte eines Abnutzungsindikators, Abnutzungsvektorelements und/oder Konfidenzwerts bzw. daraus gemittelte Größen vom Fahrzeug mit einem jeweilig vorgegebenen Schwellwert verglichen werden, woraufhin das Fahrzeug eine maximal zur Verfügung gestellte Antriebsleistung reduziert und/oder das Ansteuerungsverhalten zumindest eines Fahrerassistenzsystems hin zu einem defensiven Verhalten ändert, wenn der nachverfolgte Wert über dem Schellwert liegt. Erkennt also mit anderen Worten das Fahrzeug ein solches Nutzerverhalten, welches zu einer gesteigerten Abnutzung führt, so kann das Fahrzeug die Nutzbarkeit anpassen, sodass im Nutzungskennfeld des Fahrzeugs solche Zustände nicht mehr erreicht werden können, die zu besagter verstärkten Abnutzung führen. Das Zurücknehmen der maximalen Antriebsleistung stellt dabei den einfachsten Schritt dar. Das Fahrzeug kann jedoch das Verhalten der einzelnen Fahrerassistenzsysteme anpassen, was noch mehr Stellhebel zum Aufprägen eines defensiven Fahrverhaltens bereitstellt. Beispielsweise kann der minimale Abstand zu einem vorausfahrenden Fahrzeug in einem Abstandsregeltempomat vergrößert werden, was dazu führt, dass ein längerer Bremsweg im Falle einer Notbremsung zur Verfügung steht. Dies führt dazu, dass im Falle der Notbremsung das Fahrzeug weniger stark bremsen muss, wodurch sich auch die Bremsen weniger stark abnutzen. Auch könnte das Schaltverhalten eines Automatikgetriebes geändert werden. Wird beispielsweise durch die fahrzeugführende Person der Sportmodus aktiviert, so könnten die im Sportmodus hinterlegten Drehzahlschwellwerte zum Schalten abgesenkt werden. Es wird dann im Sportmodus zwar früher geschaltet, jedoch noch nicht so früh wie im normalen Betriebsmodus.

Das zeitliche Intervall kann dabei beliebig groß sein. Bevorzugt wird ein vergleichsweise langes zeitliches Intervall, wie mehrere Wochen oder Monate herangezogen, da somit kurzzeitige sportliche Fahrweisen toleriert werden. Hierdurch wird der Nutzerkomfort gewahrt, beispielsweise, um in einer Gefahrensituation ausreichend Antriebsleistung abzurufen, um schnell überholen zu können.

Bei einem Fahrzeug mit einer fahrzeuginternen Recheneinheit, einer Vielzahl an Überwachungsgliedern und einer Schnittstelle zur drahtlosen Datenkommunikation sind erfindungsgemäß die Recheneinheit, die Überwachungsglieder und die Schnittstelle zur drahtlosen Datenkommunikation dazu eingerichtet, die durch das Fahrzeug zu vollführenden Schritte eines im vorigen beschriebenen Verfahrens auszuführen. Bei dem Fahrzeug kann es sich um ein beliebiges Fahrzeug wie einen Pkw, Lkw, Transporter, Bus oder dergleichen handeln. Das Fahrzeug ist somit dazu in der Lage, den Abnutzungsgrad einzelner Komponenten zu bestimmen und in Abhängigkeit dessen das Durchführen von Wartungsintervallen bzw. Werkstattterminen so zu planen, dass genau dann ein Werkstattaufenthalt durchgeführt wird, wenn dies auch tatsächlich erforderlich ist. Bevorzugt kann das Fahrzeug dazu ausgeführt sein seine Nutzbarkeit anzupassen, sodass solche Fahrsituationen, die zu einer verstärkten Abnutzung beitragen, vermieden oder deren Anzahl zumindest reduziert werden.

Weitere vorteilhafte Ausgestaltungen des erfindungsgemäßen Verfahrens zur Bestimmung eines Abnutzungsindikators für ein Fahrzeug ergeben sich auch aus den Ausführungsbeispielen, welche nachfolgend unter Bezugnahme auf die Figuren näher beschrieben werden.

Dabei zeigen:
- Fig. 1: eine schematisierte Draufsicht auf ein erfindungsgemäßes Fahrzeug;
- Fig. 2: eine schematisierte Darstellung von einer Recheneinheit verarbeiteter Daten; und
- Fig. 3: ein Ablaufdiagramm eines erfindungsgemäßen Verfahrens.

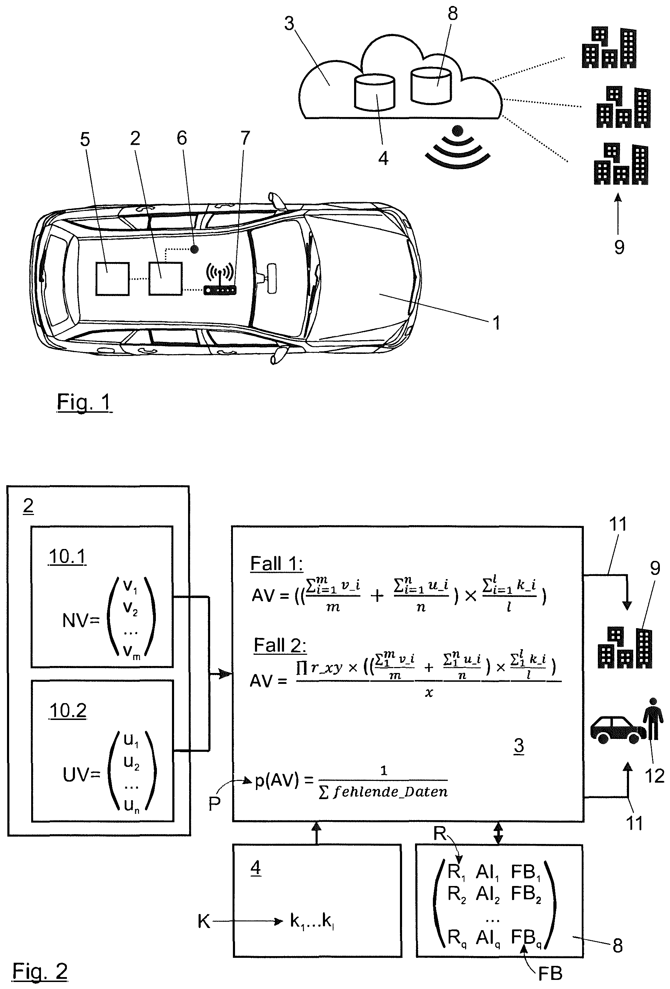

Figur 1 zeigt ein erfindungsgemäßes Fahrzeug 1, umfassend eine Recheneinheit 2, ein Steuergerät 5, einen Sensor 6 sowie eine Telekommunikationseinheit 7. Das Fahrzeug 1 bzw. die Recheneinheit 2 erfasst über die Lebensdauer des Fahrzeugs 1 fortwährend Betriebsdaten. Hierzu werden vom Sensor 6 erzeugte Sensordaten ausgewertet sowie aus dem Steuergerät 5 Daten ausgelesen. Die Recheneinheit 2 aggregiert eine vom Fahrverhalten abhängigen Teil der Betriebsdaten sowie einen von Einstellungen von Fahrzeugfunktionen abhängigen Teil der Betriebsdaten gemeinsam in einen in Figur 2 gezeigten Nutzungsvektor NV. Zudem aggregiert die Recheneinheit 2 von Umgebungsbedingungen des Fahrzeugs 1 abhängige Betriebsdaten zu einem Umgebungsvektor UV, der ebenfalls in Figur 2 gezeigt ist. Mit Hilfe der Telekommunikationseinheit 7 überträgt die Recheneinheit 2 den Nutzungsvektor NV und den Umgebungsvektor UV an eine zentrale Recheneinheit 3, beispielsweise einen Cloudserver.

Die zentrale Recheneinheit 3 verfügt über Zugriff auf eine Abnutzungsdatenbank 4. Die Abnutzungsdatenbank 4 kann, wie dargestellt, in die zentrale Recheneinheit 3 integriert sein. Die Abnutzungsdatenbank 4 könnte jedoch auch extern zur zentralen Recheneinheit 3 ausgeführt sein und kommunikativ an diese angeschlossen sein. In der Abnutzungsdatenbank 4 sind Zusammenhänge zwischen in Nutzungsvektoren NV aggregierbaren Daten und in Umgebungsvektoren UV aggregierbaren Daten zum Abnutzungsverhalten von Fahrzeugkomponenten gespeichert. Die zentrale Recheneinheit 3 gleicht den vom Fahrzeug 1 empfangenen Nutzungsvektor NV und Umgebungsvektor UV mit dem Inhalt der Abnutzungsdatenbank 4 ab und erzeugt hieraus einen ebenfalls in Figur 2 gezeigten Abnutzungsvektor AV. Jedes Vektorelement des Abnutzungsvektors AV beschreibt dabei den Abnutzungsgrad einer individuellen Fahrzeugkomponente.

Zur Berechnung der Vektorelemente des Abnutzungsvektors AV können verschiedene Methoden in Frage kommen wie Approximationsverfahren, das Verwenden heuristischer Funktionen oder das Verwenden von Maschinenlernmodellen. Aus dem Abnutzungsvektor AV berechnet die zentrale Recheneinheit 3 schließlich einen Abnutzungsindikator, der eine Bewertung des gesamten Abnutzungsgrads des Fahrzeugs 1 beschreibt. Ferner verfügt die zentrale Recheneinheit 3 über einen Relationsinformationsspeicher 8, in dem Relationsinformationen R, welche ebenfalls in Figur 2 gezeigt sind, abgespeichert werden. Hierzu kann jeder fahrzeugführenden Person eines Fahrzeugs 1 ein eindeutiges Nutzerprofil zugeordnet werden, in dem die Relationsinformationen R gespeichert werden. Bei einer Relationsinformation R handelt es sich um das Verhältnis zwischen Nutzer und Fahrzeug, also beispielsweise ob das Fahrzeug 1 der fahrzeugführenden Person gehört, von ihr geleast wird oder von ihr gemietet wird oder dergleichen.

Der von der zentralen Recheneinheit 3 ermittelte Abnutzungsindikator bzw. Abnutzungsvektor AV kann an das Fahrzeug 1 zurück übermittelt werden sowie optional an Dritte 9. Bei den Dritten 9 kann es sich beispielsweise um einen Zulieferer eines Fahrzeugherstellers oder einen Dienstleister wie einen Versicherungsanbieter handeln.

Figur 2 zeigt dabei von der Recheneinheit 2 und der zentralen Recheneinheit 3 verarbeitete Daten. Die Recheneinheit 2 verfügt über ein Nutzungsdatenerhebungsmodul 10.1 zum Aggregieren des Nutzungsvektors NV und ein Umgebungsdatenerhebungsmodul 10.2 zum Aggregieren der Umgebungsdaten zur Erzeugung des Umgebungsvektors UV.

Der Nutzungsvektor NV verfügt über verschiedene Vektorelemente v₁, v₂, vₘ. Beispielsweise nimmt das Vektorelement v₁, das für eine Batterieverbrauchs-Klasse stellvertretend sein könnte, eine Ausprägung von 1 an in einer Reichweite von 1 bis 10, was für einen sehr niedrigen Verbrauch steht. Das Vektorelement v₂ könnte beispielsweise für den Verbrauch der Klimaanlage stehen und eine Ausprägung von 8 annehmen, was für einen hohen Verbrauch für ein stark gekühltes Fahrzeug bei häufiger maximaler Lüftereinstellung steht. Ein beliebiges weiteres Vektorelement könnte für einen Geschwindigkeitsdurchschnitt stehen wie beispielsweise innerorts: 5, stellvertretend für eine mittlere Geschwindigkeit und außerorts: 4, stellvertretend für eine mittlere Geschwindigkeit.

Der Umgebungsvektor UV setzt sich aus den Vektorelemente u₁, u₂, uₙ zusammen. Beispielsweise steht das Vektorelement u₁ für eine Durchschnittstemperatur in der Fahrzeugumgebung und kann beispielsweise einen Wert von 3 in einem Bereich zwischen 1 und 10 annehmen, was für einen Normalbereich der jeweiligen Aufenthaltsregion des Fahrzeugs 1 steht. Das Vektorelement u₂ könnte beispielsweise für ein Verkehrsaufkommen stehen und einen Wert von 3 für ein geringes Aufkommen annehmen.

In der Abnutzungsdatenbank 4 sind Parameter K enthalten, die einen Zusammenhang zwischen den jeweiligen Ausprägungen des Nutzungsvektors NV und des Umgebungsvektors UV zu Abnutzungsgraden von Fahrzeugkomponenten beschreiben. Diese Parameter K beschreiben dann beispielsweise den Reifenverschleiß, die Batteriealterung, den Zustand von Zündkerzen und dergleichen. Ebenfalls kann ein Kostenfaktor enthalten sein, der mit einem Abnutzungsfaktor multipliziert werden kann, um bei der Wartung von Fahrzeugkomponenten anfallende Kosten zu prädizieren. Somit könnten auch entsprechende Kosten für jedes Vektorelement des Abnutzungsvektors AV individuell bestimmt werden, oder aber aggregiert für den Abnutzungsindikator.

Im Relationsinformationsspeicher 8 werden zu Nutzerprofilen verknüpfte Relationsinformationen R gespeichert. Beispielsweise können diese wie in Figur 2 dargestellt als Matrix abgespeichert werden. Dabei sind beispielsweise in der ersten Spalte der Matrix die Relationsinformationen R: R₁, R₂ und R_{q} abgespeichert. Für eine jeweilige Relationsinformation R wird dann in der zweiten Spalte ein relationsinformationsspezifischer Abnutzungsindikator Al₁, Al₂ und Al_{q} ermittelt und abgelegt. In der dritten Spalte kann eine weitere Größe wie beispielsweise eine Fahrstilbewertung FB₁, FB₂ und FB_{q} gespeichert sein, die die zentrale Recheneinheit 3 aus dem Nutzungsvektor NV ableiten kann. Eine jeweilige in der Matrix enthaltene Größe kann dann zur Ermittlung des Abnutzungsvektors AV bzw. Abnutzungsindikators berücksichtigt werden.

Figur 2 zeigt dabei beispielhafte von der zentralen Recheneinheit 3 berücksichtigte Formeln. Im ersten Fall erfolgt die Bestimmung ohne Berücksichtigung von Relationsinformationen R, lediglich auf Basis des Nutzungsvektors NV und des Umgebungsvektors UV. Der Index "m" entspricht dabei der Elementanzahl der Vektorelemente des Nutzungsvektors NV und "n" der entsprechenden Vektorelementanzahl des Umgebungsvektors UV. "I" entspricht dabei dem jeweiligen in der Abnutzungsdatenbank 4 gespeicherten Zusammenhänge.

Fall 2 beschreibt die Berücksichtigung einer Relationsinformation R. Die Variable r_{xy} steht dabei für ein jeweiliges Matrixelement, aus der die Relationsinnformationen R enthaltenen Matrix. Es kann über alle Matrixelemente iteriert werden oder auch nur über eine Auswahl, beispielsweise über alle Spaltenelemente der erste Spalte. Die Variable "x" entspräche dabei der Anzahl der Zeilen der Matrix und "r_xy" entspräche den einzelnen Relationsinformationen R₁, R₂, bis R_{q}.

Bei den in Figur 2 gezeigten Gleichungen für den ersten und zweiten Fall handelt es sich lediglich um Beispiele. Generell können auch unterschiedliche Approximationsgleichungen bzw. heuristische Gleichungen verwendet werden. Auch kommen Blackboxmodelle unter Verwendung von Methoden des maschinellen Lernens wie die Verwendung von künstlichen neuronalen Netzen in Frage.

Zudem kann die zentrale Recheneinheit 3 in Abhängigkeit, wie viele Daten im Nutzungsvektor NV, dem Umgebungsvektor UV oder in der Abnutzungsdatenbank 4 enthaltene Zusammenhänge vorhanden sind einen Konfidenzwert P bestimmen. Dieser repräsentiert eine Wahrscheinlichkeit, wie aussagekräftig der ermittelte Abnutzungsindikator tatsächlich ist. Zur Bestimmung des Konfidenzwerts P kann beispielsweise der Kehrwert aus der Summe der fehlenden Daten gebildet werden. Es kann auch ein relationsinformationsspezifischer Konfidenzwert gebildet werden.

Die von der zentralen Recheneinheit 3 errechneten Größen können dann wie durch einen Pfeil 11 angedeutet an Fahrzeuginsassen 12 und/oder Dritte 9 ausgegeben werden.

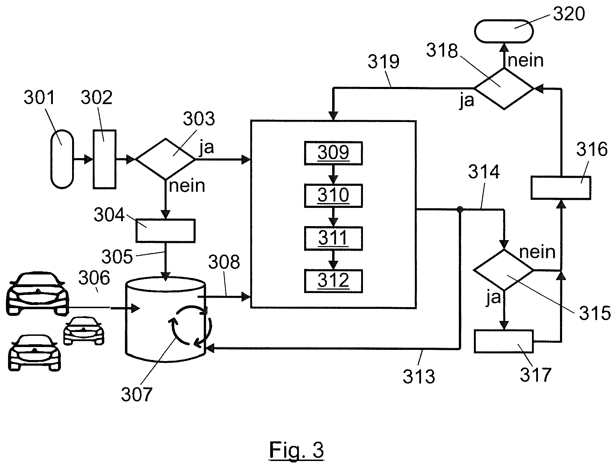

Figur 3 verdeutlicht den Ablauf des erfindungsgemäßen Verfahrens. Im Verfahrensschritt 301 startet das Verfahren. Im Verfahrensschritt 302 verwendet die fahrzeugführende Person das Fahrzeug 1 in einer bestimmten Relation, also beispielsweise das eigene Fahrzeug, ein Mietfahrzeug, das Fahrzeug eines Freundes oder Bekannten oder dergleichen. Im Verfahrensschritt 303 prüft die Recheneinheit 2 bzw. die zentrale Recheneinheit 3 ob der fahrzeugführenden Person ein eindeutiges Nutzerprofil zugeordnet werden soll und falls ja, ob dieses bereits existiert.

Soll kein Profil verwendet werden bzw. existiert dieses noch nicht, so werden im Verfahrensschritt 304 die Betriebsdaten während der Nutzung des Fahrzeugs 1 erfasst und die entsprechenden Nutzungsvektoren NV und Umgebungsvektoren UV erzeugt. Ergänzend kann eine Relationsinformation R erhoben werden.

Im Verfahrensschritt 305 werden die so erzeugten Daten an die zentralen Recheneinheit 3 zum Abspeichern übertragen. Die Fahrzeuge 1 einer Fahrzeugflotte übermitteln fortwährend im Verfahrensschritt 306 entsprechende Daten. Dabei können auch Werkstattkosten sowie die bei der Wartung festgestellten Verschleißerscheinungen mit übertragen werden. Dies erlaubt es im Verfahrensschritt 307 fortwährend die Abnutzungsdatenbank 4 zu pflegen. Im Verfahrensschritt 308 werden die vorhandenen Daten eines jeweiligen Fahrzeugs 1, gegebenenfalls unter Berücksichtigung von in der Vergangenheit ermittelten Informationen, beispielsweise in der Vergangenheit berechneter relationsspezifischer Abnutzungsindikatoren, für die weitere Berechnung zur Verfügung gestellt.

Im Verfahrensschritt 309 liest die zentrale Recheneinheit 3 den Nutzungsvektor NV, den Umgebungsvektor UV und besagte Relationsinformationen R sowie gegebenenfalls weitere Matrixelemente der in Figur 2 gezeigten Matrix ein. Im Verfahrensschritt 310 ruft die zentrale Recheneinheit 3 historische, also in der Vergangenheit liegende Betriebsdaten des Fahrzeugs 1 ab. Im Verfahrensschritt 311 berechnet die zentrale Recheneinheit 3 den Abnutzungsvektor und Abnutzungsindikator sowie gegebenenfalls den Konfidenzwert P. Zudem berechnet die zentrale Recheneinheit 3 im Verfahrensschritt 312 zusätzlich Alternativ-Abnutzungsvektoren bzw. Alternativ-Abnutzungsindikatoren, wobei hierzu zumindest ein Vektorelement des zur Berechnung des Abnutzungsvektors verwendeten Nutzungsvektors NV durch einen emulierten Wert ersetzt wird.

Im Verfahrensschritt 313 erfolgt eine kontinuierliche Speicherung der so berechneten Daten in der zentralen Recheneinheit 3. So kann das Nutzerprofil der fahrzeugführenden Person über die Zeit gepflegt werden. Hierzu können die einzelnen Vektorelemente bzw. Matrixelemente als zeitabhängige Größen definiert sein. Somit beschreibt ein jeweiliges Vektor- bzw. Matrixelement eine zeitabhängige Funktion.

Im Verfahrensschritt 314 werden die berechneten Ergebnisse an das Fahrzeug 1 rückübermittelt. Das jeweilige Fahrzeug 1 bzw. Recheneinheit 2 überprüft dann im Verfahrensschritt 315, ob ein kritischer Schwellwert überschritten wurde. Überschreitet ein kritischer Schwellwert für zumindest ein Vektorelement des Abnutzungsvektors bzw. ein Schwellwert für den Abnutzungsindikator einen bestimmten Wert, so bedeutet dies, dass eine Fahrzeugkomponente zu große Abnutzungserscheinungen zeigt. Darauf aufbauend können die entsprechenden Informationen im Verfahrensschritt 316 im Fahrzeug 1 akustisch und/oder visuell ausgegeben werden. Ergänzend oder alternativ kann im Verfahrensschritt 317 eine Anpassung von Fahrzeugfunktionen erfolgen. So kann beispielsweise die maximal abrufbare Antriebsleistung reduziert werden, der minimal zulässige Abstand zu einem vorausfahrenden Fahrzeug für einen Abstandregeltempomaten vergrößert werden und dergleichen.

Im Verfahrensschritt 318 prüft das Fahrzeug 1, ob es gerade verwendet wird. Ist dies der Fall, so findet im Verfahrensschritt 319 eine zyklische Neuberechnung auf Basis aktueller Werte statt. Ist dies hingegen nicht der Fall, so endet das Verfahren im Verfahrensschritt 320.

## Patentansprüche

1. Verfahren zur Bestimmung eines Abnutzungsindikators für ein Fahrzeug (1), wobei das Fahrzeug (1) über seine Lebensdauer hinweg mittels Überwachungsgliedern fortwährend Betriebsdaten erfasst und zumindest einige der Betriebsdaten über die Nutzungsdauer des Fahrzeugs (1) gespeichert und durch eine Recheneinheit (2, 3) verarbeitet werden, wobei ein Teil der Betriebsdaten von einem Fahrverhalten einer das Fahrzeug führenden Person abhängig ist,
**dadurch gekennzeichnet, dass**
- der vom Fahrverhalten abhängige Teil der Betriebsdaten und ein von Einstellungen von Fahrzeugfunktionen abhängiger Teil der Betriebsdaten in einem Nutzungsvektor (NV) aggregiert werden, wobei jedem Vektorelement (v₁, v₂, vₘ) durch ein individuelles Überwachungsglied generierte Daten zugeteilt werden;
- ein Umgebungsbedingungen des Fahrzeugs (1) repräsentierender Teil der Betriebsdaten in einem Umgebungsvektor (UV) aggregiert wird, wobei jedem Vektorelement (u₁, u₂, uₙ) durch ein individuelles Überwachungsglied generierte Daten zugeteilt werden;
- das Fahrzeug (1) den Nutzungsvektor (NV) und den Umgebungsvektor (UV) an eine fahrzeugexterne zentrale Recheneinheit (3) übermittelt, wobei die zentrale Recheneinheit (3) Zugriff auf eine Abnutzungsdatenbank (4) hat, in der Zusammenhänge zwischen den im Nutzungsvektor (NV) aggregierbaren Daten und den im Umgebungsvektor (UV) aggregierbaren Daten zum Abnutzungsverhalten von Fahrzeugkomponenten enthalten sind;
- die zentrale Recheneinheit (3) den Nutzungsvektor (NV) und den Umgebungsvektor (UV) mit dem Inhalt der Abnutzungsdatenbank (4) abgleicht und hieraus einen Abnutzungsvektor (AV) ermittelt, wobei jedes Vektorelement den Abnutzungsgrad einer individuellen Fahrzeugkomponente beschreibt; und
- die zentrale Recheneinheit (3) unter Verrechnung der Vektorelemente des Abnutzungsvektors (AV) den Abnutzungsindikator berechnet; und wobei
- die zentrale Recheneinheit (3) wenigstens ein Vektorelement (v₁, v₂, vₘ) des Nutzungsvektors (NV) durch ein korrespondierendes, emuliertes Vektorelement austauscht und hierauf basierend einen Alternativ-Abnutzungsvektor und Alternativ-Abnutzungsindikator ermittelt und diese an das Fahrzeug (1) übermittelt; wobei
- die zentrale Recheneinheit (3) den Abnutzungsindikator und den Abnutzungsvektor (AV) an das Fahrzeug (1) übermittelt; und
- der Abnutzungsindikator sowie der Alternativ-Abnutzungsindikator und/oder der Wert zumindest eines Vektorelements des Abnutzungsvektors (AV) sowie des Alternativ-Abnutzungsvektors im Fahrzeug (1) an die fahrzeugführende Person ausgegeben werden.

2. Verfahren nach Anspruch 1,
**dadurch gekennzeichnet, dass**
- das Fahrzeug (1) die fahrzeugführende Person identifiziert, ihr ein personenspezifisches Nutzerprofil zuordnet und dieses an die zentrale Recheneinheit (3) übermittelt, wobei der Abnutzungsindikator mit dem Nutzerprofil verknüpft wird;
- das Fahrzeug (1) oder die zentrale Recheneinheit (3) Relationsinformationen (R₁, R₂, R_{q}) erhebt, wobei eine Relationsinformation (R) beschreibt innerhalb welcher vertraglichen Rahmenbedingungen die fahrzeugführende Person das Fahrzeug (1) nutzt; und
- die zentrale Recheneinheit (3) für jede neue Relationsinformation (R) einen relationsinformationsspezifischen Abnutzungsindikator (Al₁, Al₂, Al_{q}) ermittelt.

3. Verfahren nach Anspruch 2,
**dadurch gekennzeichnet, dass**
die zentrale Recheneinheit (3) die Relationsinformation (R) als weiteren Einflussparameter zum Bestimmen einer Ausprägung eines jeweiligen relationsinformationsspezifischen Abnutzungsindikators (Al₁, Al₂, Al_{q}) berücksichtigt.

4. Verfahren nach einem der Ansprüche 1 bis 3,
**dadurch gekennzeichnet, dass**
die zentrale Recheneinheit (3) für jeden Abnutzungsindikator einen Konfidenzwert (P) in Abhängigkeit einer Vollständigkeit des Nutzungsvektors (NV), Umgebungsvektors (UV) und/oder der in der Abnutzungsdatenbank (4) hinterlegten Zusammenhänge ermittelt, der bei einem während der Ermittlung eines jeweiligen Abnutzungsindikators vergleichsweise vollständigen Nutzungsvektor (NV), Umgebungsvektor (UV) und/oder Abnutzungsdatenbank (4) eine hohe Zutreff-Wahrscheinlichkeit und bei einem vergleichsweise unvollständigen Nutzungsvektor (NV), Umgebungsvektor (UV) und/oder Abnutzungsdatenbank (4) eine geringe Zutreff-Wahrscheinlichkeit beschreibt.

5. Verfahren nach einem der Ansprüche 2 bis 4,
**dadurch gekennzeichnet, dass**
die zentrale Recheneinheit (3) einen relationsinformationsspezifischen Alternativ-Abnutzungsvektor und Alternativ-Abnutzungsindikator ermittelt und an das Fahrzeug (1) übermittelt.

6. Verfahren nach einem der Ansprüche 1 bis 5,
**dadurch gekennzeichnet, dass**
das Fahrzeug (1) über ein zeitliches Intervall einen Verlauf zumindest eines Abnutzungsindikators, Abnutzungsvektorelements, Konfidenzwerts (P) und/oder eines gemittelten Abnutzungsindikators, Abnutzungsvektorelements und/oder Konfidenzwerts nachverfolgt, einen jeweiligen nachverfolgten Wert mit einem jeweiligen vorgegebenen Schwellwert vergleicht und im Fahrzeug (1) einen Hinweis zum Durchführen einer Fahrzeugwartung früher ausgibt, wenn der nachverfolgte Wert über dem Schwellwert liegt und den Hinweis später ausgibt, wenn der nachverfolgte Wert unter dem Schwellwert liegt.

7. Verfahren nach einem der Ansprüche 1 bis 6,
**dadurch gekennzeichnet, dass**
das Fahrzeug (1) über ein zeitliches Intervall einen Verlauf zumindest eines Abnutzungsindikators, Abnutzungsvektorelements, Konfidenzwerts (P) und/oder eines gemittelten Abnutzungsindikators, Abnutzungsvektorelements und/oder Konfidenzwerts nachverfolgt, einen jeweiligen nachverfolgten Wert mit einem jeweiligen vorgegebenen Schwellwert vergleicht und eine maximal zur Verfügung gestellte Antriebsleistung reduziert und/oder das Ansteuerungsverhalten zumindest eines Fahrerassistenzsystems hin zu einem defensiven Verhalten ändert, wenn der nachverfolgte Wert über dem Schwellwert liegt.

8. Fahrzeug (1) mit einer fahrzeuginternen Recheneinheit (2), einer Vielzahl an Überwachungsgliedern und einer Schnittstelle zur drahtlosen Datenkommunikation, **dadurch gekennzeichnet, dass**
die Recheneinheit (2), die Überwachungsglieder und die Schnittstelle zur drahtlosen Datenkommunikation dazu eingerichtet sind die durch das Fahrzeug zu vollführenden Schritte eines Verfahrens nach einem der Ansprüche 1 bis 7 auszuführen.

## Claims

1. Method for establishing a wear indicator for a vehicle (1), wherein the vehicle (1) continuously acquires operating data over its service life by means of monitoring components and at least some of the operating data are stored over the service life of the vehicle (1) and are processed by a processing unit (2, 3), wherein a portion of the operating data is dependent on a driving behavior of a person driving the vehicle,
**characterized in that**
- the portion of the operating data dependent on driving behavior and a portion of the operating data dependent on settings of vehicle functions are aggregated in a usage vector (NV), wherein each vector element (v₁, v₂, vₘ) is assigned data generated by an individual monitoring element;
- a portion of the operating data representing environment conditions of the vehicle (1) is aggregated in an environment vector (UV), wherein each vector element (u₁, u₂, uₙ) is assigned data generated by an individual monitoring element;
- the vehicle (1) transmits the usage vector (NV) and the environment vector (UV) to a central processing unit (3) external to the vehicle, wherein the central processing unit (3) has access to a wear database (4) containing relationships between the data that can be aggregated in the usage vector (NV) and the data that can be aggregated in the environment vector (UV) on the wear behavior of vehicle components;
- the central processing unit (3) compares the usage vector (NV) and the environment vector (UV) with the content of the wear database (4) and determines therefrom a wear vector (AV), wherein each vector element describes the degree of wear of an individual vehicle component; and
- the central processing unit (3) calculates the wear indicator by offsetting the vector elements of the wear vector (AV); and wherein
- the central processing unit (3) replaces at least one vector element (v₁, v₂, vₘ) of the usage vector (NV) with a corresponding, emulated vector element and, based thereon, determines an alternative wear vector and alternative wear indicator and transmits these to the vehicle (1); wherein
- the central processing unit (3) transmits the wear indicator and the wear vector (AV) to the vehicle (1); and
- the wear indicator as well as the alternative wear indicator and/or the value of at least one vector element of the wear vector (AV) as well as the alternative wear vector in the vehicle (1) are output to the person driving the vehicle.

2. Method according to claim 1,
**characterized in that**
- the vehicle (1) identifies the person driving the vehicle, assigns a person-specific user profile to them and transmits this to the central processing unit (3), wherein the wear indicator is linked to the user profile;
- the vehicle (1) or the central processing unit (3) collects relation information (R₁, R₂, R_{q}), wherein a piece of relation information (R) describes the contractual framework within which the person driving the vehicle uses the vehicle (1); and
- the central processing unit (3) determines a relation information-specific wear indicator (Al₁, Al₂, Al_{q}) for each new piece of relation information (R).

3. Method according to claim 2,
**characterized in that**
the central processing unit (3) takes the relation information (R) into account as a further influencing parameter in order to establish the attribute value of a corresponding relation information-specific wear indicator (Al₁, Al₂, Al_{q}).

4. Method according to any of claims 1 to 3,
**characterized in that**
the central processing unit (3) determines a confidence value (P) for each wear indicator depending on a completeness of the usage vector (NV), environment vector (UV) and/or the relationships stored in the wear database (4), which confidence value describes a high probability of accuracy when the usage vector (NV), environment vector (UV) and/or wear database (4) is comparatively complete during the determination of a corresponding wear indicator, and a low probability of accuracy when the usage vector (NV), environment vector (UV) and/or wear database (4) is comparatively incomplete.

5. Method according to any of claims 2 to 4,
**characterized in that**
the central processing unit (3) determines a relation information-specific alternative wear vector and alternative wear indicator and transmits them to the vehicle (1).

6. Method according to any of claims 1 to 5,
**characterized in that**
the vehicle (1) tracks a progression of at least one wear indicator, wear vector element, confidence value (P) and/or an averaged wear indicator, wear vector element and/or confidence value over a time interval, compares a corresponding tracked value with a corresponding predetermined threshold value and outputs an indication in the vehicle (1) for carrying out vehicle maintenance earlier if the tracked value is above the threshold value and outputs the indication later if the tracked value is below the threshold value.

7. Method according to any of claims 1 to 6,
**characterized in that**
the vehicle (1) tracks a progression of at least one wear indicator, wear vector element, confidence value (P) and/or an averaged wear indicator, wear vector element and/or confidence value over a time interval, compares a corresponding tracked value with a corresponding predetermined threshold value and reduces a maximum drive power provided and/or changes the control behavior of at least one driver assistance system toward a defensive behavior if the tracked value is above the threshold value.

8. Vehicle (1) comprising an internal computing unit (2), a plurality of monitoring elements and an interface for wireless data communication,
**characterized in that**
the computing unit (2), the monitoring components and the interface for wireless data communication are designed to carry out the steps of a method according to any of claims 1 to 7 that are to be performed by the vehicle.

## Revendications

1. Procédé de détermination d'un indicateur d'usure pour un véhicule (1), dans lequel le véhicule (1) acquiert en permanence des données de fonctionnement pendant sa durée de vie par le biais d'éléments de surveillance et au moins certaines des données de fonctionnement sont mémorisées pendant la durée d'utilisation du véhicule (1) et traitées par une unité de calcul (2, 3), dans lequel une partie des données de fonctionnement dépend d'un comportement de conduite d'une personne conduisant le véhicule,
**caractérisé en ce que**
- la partie des données de fonctionnement qui dépend du comportement de conduite et une partie des données de fonctionnement qui dépend de réglages de fonctions de véhicule sont agrégées dans un vecteur d'utilisation (NV), dans lequel des données générées par un élément de surveillance individuel sont attribuées à chaque élément de vecteur (v₁, v₂, vₘ) ;
- une partie des données de fonctionnement représentant des conditions d'environnement du véhicule (1) est agrégée dans un vecteur d'environnement (UV), dans lequel des données générées par un élément de surveillance individuel sont attribuées à chaque élément de vecteur (u₁, u₂, _{Un}) ;
- le véhicule (1) transmet le vecteur d'utilisation (NV) et le vecteur d'environnement (UV) à une unité de calcul centrale (3) externe au véhicule, dans lequel l'unité de calcul centrale (3) a accès à une base de données d'usure (4) dans laquelle sont contenues des corrélations entre les données pouvant être agrégées dans le vecteur d'utilisation (NV) et les données pouvant être agrégées dans le vecteur d'environnement (UV) concernant le comportement d'usure de composants de véhicule ;
- l'unité de calcul centrale (3) compare le vecteur d'utilisation (NV) et le vecteur d'environnement (UV) avec le contenu de la base de données d'usure (4) et en établit un vecteur d'usure (AV), dans lequel chaque élément de vecteur décrit le degré d'usure d'un composant de véhicule individuel ; et
- l'unité de calcul centrale (3) calcule l'indicateur d'usure en calculant les éléments de vecteur du vecteur d'usure (AV) ; et dans lequel
- l'unité de calcul centrale (3) remplace au moins un élément de vecteur (v₁, v₂, vₘ) du vecteur d'utilisation (NV) par un élément de vecteur émulé correspondant et établit sur cette base un vecteur d'usure alternatif et un indicateur d'usure alternatif et les transmet au véhicule (1) ; dans lequel
- l'unité de calcul centrale (3) transmet l'indicateur d'usure et le vecteur d'usure (AV) au véhicule (1) ; et
- l'indicateur d'usure ainsi que l'indicateur d'usure alternatif et/ou la valeur d'au moins un élément de vecteur du vecteur d'usure (AV) ainsi que du vecteur d'usure alternatif dans le véhicule (1) sont délivrés à la personne conduisant le véhicule.

2. Procédé selon la revendication 1,
**caractérisé en ce que**
- le véhicule (1) identifie la personne conduisant le véhicule, lui associe un profil d'utilisateur spécifique à la personne et transmet celui-ci à l'unité de calcul centrale (3), dans lequel l'indicateur d'usure est couplé au profil d'utilisateur ;
- le véhicule (1) ou l'unité de calcul centrale (3) collecte des informations de relation (R₁, R₂, R_{q}), dans lequel une information de relation (R) décrit dans quelles conditions générales contractuelles la personne conduisant le véhicule utilise le véhicule (1) ; et
- l'unité de calcul centrale (3) établit pour chaque nouvelle information de relation (R) un indicateur d'usure (Al₁, Al₂, Al_{q}) spécifique à l'information de relation.

3. Procédé selon la revendication 2,
**caractérisé en ce que**
l'unité de calcul centrale (3) prend en compte l'information de relation (R) comme autre paramètre d'influence pour déterminer une expression d'un indicateur d'usure (Al₁, Al₂, Al_{q}) respectif spécifique à l'information de relation.

4. Procédé selon l'une des revendications 1 à 3,
**caractérisé en ce que**
l'unité de calcul centrale (3) établit pour chaque indicateur d'usure une valeur de confiance (P) en fonction d'une exhaustivité du vecteur d'utilisation (NV), du vecteur d'environnement (UV) et/ou des corrélations enregistrées dans la base de données d'usure (4), valeur qui, pendant l'établissement d'un indicateur d'usure respectif, présente une probabilité d'occurrence élevée dans le cas d'un vecteur d'utilisation (NV), d'un vecteur d'environnement (UV) ou d'une base de données d'usure (4) comparativement complets, et une probabilité d'occurrence faible pour un vecteur d'utilisation (NV), un vecteur d'environnement (UV) et/ou une base de données d'usure (4) comparativement incomplets.

5. Procédé selon l'une des revendications 2 à 4,
**caractérisé en ce que**
l'unité de calcul centrale (3) établit un vecteur d'usure alternatif et un indicateur d'usure alternatif spécifiques à l'information de relation et les transmet au véhicule (1).

6. Procédé selon l'une des revendications 1 à 5,
**caractérisé en ce que**
le véhicule (1) suit sur un intervalle de temps une évolution d'au moins un indicateur d'usure, un élément de vecteur d'usure, une valeur de confiance (P) et/ou un indicateur d'usure moyen, un élément de vecteur d'usure et/ou une valeur de confiance, compare une valeur suivie respective à une valeur seuil prédéfinie respective et émet dans le véhicule (1) une indication pour effectuer un entretien du véhicule plus tôt si la valeur suivie est supérieure à la valeur seuil et émet l'indication plus tard si la valeur suivie est inférieure à la valeur seuil.

7. Procédé selon l'une des revendications 1 à 6,
**caractérisé en ce que**
le véhicule (1) suit sur un intervalle de temps une évolution d'au moins un indicateur d'usure, un élément de vecteur d'usure, une valeur de confiance (P) et/ou un indicateur d'usure moyen, un élément de vecteur d'usure et/ou une valeur de confiance, compare une valeur suivie respective à une valeur seuil prédéfinie respective et réduit une puissance d'entraînement maximale mise à disposition et/ou modifie le comportement de commande d'au moins un système d'assistance au conducteur vers un comportement défensif, lorsque la valeur suivie est supérieure à la valeur seuil.

8. Véhicule (1) comportant une unité de calcul (2) interne au véhicule, une pluralité d'éléments de surveillance et une interface pour la communication de données sans fil,
**caractérisé en ce que**
l'unité de calcul (2), les éléments de surveillance et l'interface de communication de données sans fil sont conçus pour exécuter les étapes d'un procédé selon l'une des revendications 1 à 7 qui doivent être effectuées par le véhicule.
